# EUROPEAN PATENT SPECIFICATION

(11) **EP 0 266 423 B1**
(45) Date of publication and mention of the grant of the patent: **09.03.1994**
(21) Application number: 86902496.8
(22) Date of filing: 16.04.1986
(51) Int. Cl.: G10L 3/00

(54) **METHOD OF COLLATING VOICE PATTERN IN VOICE RECOGNIZING APPARATUS**
VERFAHREN ZUM SPRACHMUSTERVERGLEICH IN EINER SPRACHERKENNUNGSEINRICHTUNG
PROCEDE D'ASSEMBLAGE DE STRUCURES VOCALES DANS UN APPAREIL DE RECONNAISSANCE VOCALE

(43) Date of publication of application: 11.05.1988
(73) Proprietor: Ricoh Company, Ltd, Ohta-ku Tokyo 143 (JP)
(72) Inventor: YASUDA, Seigo, Yokosuka-shi Kanagawa-ken 239 (JP)
(74) Representative: Thévenet, Jean-Bruno
(86) International application number: JP8600191
(87) International publication number: WO8706384

(56) References cited:
- JP-A- 576 900
- JP-A- 6 195 397

## Description

### FIELD OF TECHNOLOGY

This invention relates to a pattern matching method in a voice recognition unit.

### BACKGROUND TECHNOLOGY

In voice recognition, in order to reduce recognition processing or to enhance recognition speed, it has been proposed first to preliminarily select those words high in similarity and then to carry out main recognition at high accuracy for the preliminarily selected words; however, conventionally, using the data of the beginning of a word, a main selection was carried out upon completion of all of the preliminary selection, so that, even if the end of a word had arrived during the preliminary selection, the main selection could not be entered until completion of the preliminary selection, whereby, in particular, there was a disadvantage of requiring long processing time for a relatively short word.

The present invention has been made so as to obviate the drawbacks of the prior art as described above, and, in particular, with an objective to carry out recognition processing in a voice recognition unit having two functions of preliminary and main selections at high speed.

There is also disclosed in document JP-A-57 06 900 a voice recognition process that corresponds to the preamble of claim 1, with the main selection procedure being initiated upon detection of a silent interval while the preliminary selection is allowed to continue concurrently.

### DISCLOSURE OF THE INVENTION

The present invention attains the above-described objective by a voice recognition method as defined in claim 1.

For further embodiments of the invention, see also claims 2-4.

### BRIEF DESCRIPTION OF THE DRAWINGS

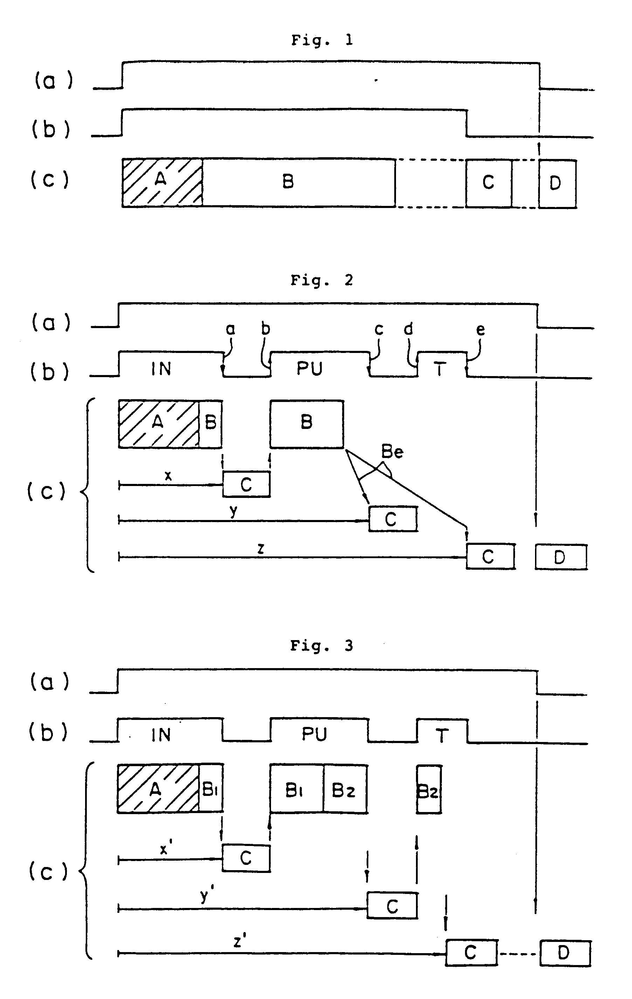

Figs. 1 through 3 are time charts for illustrating embodiments of a voice pattern matching method according to the present invention.

### MOST PREFERRED FORM TO PRACTICE THE PRESENT INVENTION

To describe the present invention more in detail, modes of practice of the present invention will be described with reference to the attached drawings hereinbelow.

Fig. 1 is a time chart for illustrating a process in the case where no voiceless interval is included in a voice interval, in which (a) indicates a single word pulse, (b) a voice interval pulse, and (c) a process procedure, wherein voice interval pulse (b) is a pulse obtained by detecting a voice power signal with a predetermined threshold value and the single word pulse (a) is a pulse generated upon detection of a rest interval (generally, 200 - 350 ms) upon completion of the voice interval pulse. Besides, in (c), A is a word beginning data take-in section, B is a preliminary selection section, C is a main selection section, and D is a result output section, wherein, the preliminary selection is carried out on the basis of n frames of data at the beginning, and, as a result, top-ranked l number of words are extracted from subject words in a library to a certain number of words, followed by outputting a result by carrying out the main selection processing for the extracted result. However, in this case, in the case of a word including a voiceless interval, such as "INPUT", and a relatively short word, such as a numeral, the time for preliminary selection can be an obstacle for the main selection, which has obstructed to carry out the recognition processing at high speed.

Fig. 2 is a time chart for illustrating the processing in the case of inclusion of a voiceless interval; in the first place, immediately following taking in of voice data A over a certain range from the beginning of a word, its preliminary selection B is entered, and, if a voice end edge a of a voice interval pulse is produced while the preliminary selection is being executed, the preliminary selection is interrupted promptly, and, upon storing all of an intermediate result of the preliminary selection and of the word currently being processed, the main selection C for the interval x is carried out. In this main selection, in the first place, using the previous intermediate result of the preliminary selection, the main selection is carried out on the basis of the result of the preliminary selection up to the interrupted word, and, thereafter, the main selection is carried out for the entire word to attain a final result (one having the highest degree of similarity). If a start edge b of the next voice interval has been reached during the processing of this main selection, the processing of said main selection C is interrupted, and the result of the main selection is all rendered invalid. This also holds true in the case of waiting for an end edge of a single word pulse upon completion of the main selection. When the edge of b has been appreciated in this manner, the main selection is rendered invalid, thereby returning to the state of the next preliminary selection to continue the processing from halfway. Thereafter, if the voice/voiceless interval is repeated, the same processing is carried out until after the termination of the preliminary selection. On the other hand, when the single word pulse (a) has terminated, a result D of the main selection is output at that point in time. Then, in the case where the preliminary selection has terminated at some point in time Be, then the subsequent processing becomes only the main selection based thereon, so that the main selection is carried out each time when the start edge of a voiceless interval is encountered, thereby waiting for the termination of the single word pulse and for the outcome of the output result If processed in this manner, even if the length of a word is short, the most efficient processing can be carried out, thereby permitting an optimal high-speed processing by the preliminary selection.

Fig. 3 is a time chart showing a processing example in the case where the preliminary selection has terminated, though a voice interval continues for a relatively long period of time, in the case shown in Fig. 2. In this case, upon completion of a first preliminary selection B₁, a second preliminary selection B₂ is carried out on the basis of the first preliminary selection (e.g., the first preliminary selection B₁ being carried out by n frames of the beginning of a word and the second preliminary selection B₂ being carried out by m frames from the beginning of the word with m being larger than n), and similarly as described above, if it is carried out in combination with the main selection for the presence/absence of voice, the time period for processing the main selection from the end of the word may be further shortened, thereby allowing to handle an increased number of words and also to further shorten the time period for processing the main selection.

As is obvious from the above description, in accordance with the present invention, in a matching method of a recognition unit for carrying out the main selection processing from the end of a word, it is possible to carry out the optimal high-speed processing for a word of any length. Furthermore, by utilizing the present invention in pattern matching processing, there is obtained an optimal high-speed processing for a word of any length, thereby allowing to speed-up the processing time from the end of a word and to enhance the recognition rate and allowing to minimize the effect on the processing speed even if the number of words in a library is increased.

### INDUSTRIAL APPLICABILITY

As described in detail above, the voice pattern identifying method of the present invention may be applied for voice recognition.

## Claims

1. A voice recognition method operative upon detection of a voiceless interval in a voice block signal on which voice recognition is effected, the method comprising the steps of:
- carrying out a preliminary selection using a certain range of data at the beginning of an unknown uttered word, and
- carrying out a main selection upon completion of production of a word,
characterized in that if said voice block signal changes to a voiceless interval while the preliminary selection is being carried out on the basis of information at the beginning of the word, the preliminary selection step is interrupted and the main selection step is carried out, whereupon a result of main selection processing is outputted if the signal leads to an end of voice production; whereas if the signal again returns to a voice interval, the preliminary selection is re-started, the main selection is interrupted and the result therefrom is discarded.

2. The voice recognition method as defined in claim 1, wherein an intermediate result of the interrupted preliminary selection processing is stored and a continuation of said intermediate result is pursued at the time when the preliminary selection is restarted.

3. The voice recognition method as defined in claim 2, wherein said preliminary and main selections differ, the main recognition processing is carried out each time a voiceless interval occurs, the intermediate result of the preliminary selection being used for library words upon which the preliminary selection has already been carried out, and thereafter matching is carried out for the entire word.

4. The voice recognition method as defined in claim 1, 2 or 3, wherein, in the case where a first preliminary selection has terminated and a voice interval continues, a second preliminary selection is additionally carried out utilizing the result of the first preliminary selection.

## Patentansprüche

1. Spracherkennungsverfahren, welches bei Erfassen eines sprachlosen Intervalls innerhalb eines Sprachblocksignals, bei dem die Spracherkennung vorzunehmen ist, wirksam wird, umfassend die Schritte:
- Durchführen einer Vorabauswahl unter Verwendung eines gewissen Bereichs von Daten am Beginn eines unbekannten geäußerten Worts, und
- Ausführen einer Hauptauswahl nach Abschluß der Erzeugung eines Worts,
**dadurch gekennzeichnet**, daß, wenn das Sprachblocksignal zu einem sprachlosen Intervall übergeht, während die Vorabauswahl auf der Grundlage der Information zu Beginn des Worts durchgeführt wird, der Schritt der Vorabauswahl unterbrochen und die Hauptauswahl durchgeführt wird, woraufhin ein Ergebnis der Hauptauswahl-Verarbeitung ausgegeben wird, wenn das Signal zu einem Ende der Spracherzeugung führt; wohingegen dann, wenn das Signal erneut zu einem Sprachintervall zurückkehrt, die Vorabauswahl erneut aufgenommen wird, die Hauptauswahl unterbrochen wird und deren Ergebnis abgelegt wird.

2. Spracherkennungsverfahren nach Anspruch 1, bei dem ein Zwischenergebnis der unterbrochenen Vorabauswahl-Verarbeitung gespeichert wird und eine Fortsetzung des Zwischenergebnisses zu der Zeit aufgenommen wird, wenn die Vorabauswahl erneut gestartet wird.

3. Spracherkennungsverfahren nach Anspruch 2, bei dem sich die Vorab- und die Hauptauswahl voneinander unterscheiden, wobei die Haupterkennungsverarbeitung bei jedem Auftreten eines sprachlosen Intervalls durchgeführt wird, das Zwischenergebnis der Vorabauswahl für Wörterbuch-Wörter verwendet wird, bei denen die Vorabauswahl bereits durchgeführt worden ist, und anschließend ein Abgleich für das gesamte Wort durchgeführt wird.

4. Spracherkennungsverfahren nach Anspruch 1, 2 oder 3, bei dem für den Fall, daß eine erste Vorabauswahl abgeschlossen ist und ein Sprachintervall fortgesetzt wird, eine zweite Vorabauswahl zusätzlich durchgeführt wird, indem das Ergebnis der ersten Vorabauswahl verwendet wird.

## Revendications

1. Procédé de reconnaissance de la parole pouvant être mis en oeuvre dès la détection d'un intervalle muet dans un signal de bloc vocal auquel la reconnaissance de la parole est appliquée, le procédé comprenant les opérations suivantes :
effectuer une sélection préliminaire en utilisant une certaine étendue de données se trouvant au début d'un mot prononcé inconnu, et
effectuer une sélection principale dès achèvement de la production d'un mot,
caractérisé en ce que, si ledit signal de bloc vocal passe à un intervalle muet pendant que la sélection préliminaire est exécutée sur la base de l'information relative au début du mot, l'opération de sélection préliminaire est interrompue et l'opération de sélection principale est effectuée, si bien qu'un résultat de traitement de sélection principale est délivré si le signal aboutit à une fin de production vocale, tandis que, si le signal revient de nouveau à un intervalle vocal, la sélection préliminaire redémarre, la sélection principale est interrompue, et le résultat de cette dernière est rejeté.

2. Procédé de reconnaissance de la parole selon la revendication 1, où le résultat intermédiaire du traitement interrompu de sélection préliminaire est mémorisé, et la continuation dudit résultat intermédiaire est effectuée au moment où la sélection préliminaire redémarre.

3. Procédé de reconnaissance de la parole selon la revendication 2, où lesdites sélections préliminaire et principale diffèrent, le traitement de reconnaissance principale est effectuée à chaque fois qu'un intervalle muet apparaît, le résultat intermédiaire de la sélection préliminaire étant utilisée pour les mots de bibliothèque sur lesquels la sélection préliminaire a déjà été effectuée, et, après cela, une corrélation est réalisée pour le mot entier.

4. Procédé de reconnaissance de la parole selon la revendication 1,2 ou 3, où dans le cas où une première sélection préliminaire a pris fin et que l'intervalle vocal se poursuit, une deuxième sélection préliminaire est effectuée en outre, laquelle utilise le résultat de la première sélection préliminaire.
